Europäisches Patentamt

European Patent Office

Office européen des brevets

(11) Veröffentlichungsnummer: **0 106 312**
**A1**

(12) # EUROPÄISCHE PATENTANMELDUNG

(21) Anmeldenummer: 83110169.6

(22) Anmeldetag: 12.10.83

(51) Int. Cl.³: **G 01 F 11/14**

(30) Priorität: 20.10.82 DE 3238738

(43) Veröffentlichungstag der Anmeldung:
25.04.84 Patentblatt 84/17

(84) Benannte Vertragsstaaten:
AT BE CH DE FR GB IT LI NL SE

(71) Anmelder: Henkel Kommanditgesellschaft auf Aktien
Postfach 1100 Henkelstrasse 67
D-4000 Düsseldorf-Holthausen(DE)

(72) Erfinder: Vierkötter, Peter
Sperberweg 7
D-5090 Leverkusen 3(DE)

(54) Dosiervorrichtung mit Kolbenschieber als Portionierer.

(57) Die Dosiervorrichtung besitzt einen stangenförmigen, gegen eine elastische Rückstellkraft beweglich gelagerten Kolbenschieber (4) als Portionierer. Der Kolbenschieber (4) ist im Bereich seines freien Endes von einer Einschnürung (14) umgeben, die durch Längsverschieben aus dem Behälterinnern (9) über eine Bohrung (3) nach außen zu bewegen ist. Die Aufgabe besteht darin, die Vorrichtung aus möglichst wenigen, in der Massenproduktion herzustellenden, zu konfektionierenden und zu befüllenden Teilen zusammenzusetzen. Erfindungsgemäß werden zwei Bauteile (1, 2) vorgesehen, nämlich ein mit dem Kolbenschieber (4) einstückigen Produktbehältertopf (2) und ein die Bohrung (3) für den Kolbenschieberkopf (13) aufweisender Produktbehälterdeckel (1).

Fig. 1

Croydon Printing Company Ltd.

P a t e n t a n m e l d u n g
D 6671 EP

"Dosiervorrichtung mit Kolbenschieber als Portionierer"

Die Erfindung betrifft eine Dosiervorrichtung mit einem stangenförmigen, gegen eine elastische Rückstellkraft in Stangenlängsrichtung beweglich gelagerten sowie durch einen das Dosiergut enthaltenden Produktbehälter führenden Kolbenschieber als Portionierer, wobei der Kolbenschieberkopf eine beim Vorschub aus dem Innern des Produktbehälters über eine passende Bohrung nach außen zu schiebende Einschnürung mit der Dosiermenge entsprechender Größe aufweist.

Eine Dosiervorrichtung dieser Art wird in der DE-OS 21 43 403 beschrieben. In dem aus dieser Druckschrift bekannten Taschendosiergerät für rieselförmiges Gut werden zum Betätigen des Kolbenschiebers eine aus dem Produktbehälter über eine gesonderte Bohrung herausgeführte Stangenverlängerung, eine Spiralfeder als Rückstellkraft und eine Schutzkappe zum Führen und Aufnehmen der Stangenverlängerung sowie zum Abdecken der Spiralfeder benötigt. Die bekannte Vorrichtung besitzt einen so vielteilig-komplizierten Aufbau, daß die Herstellung auch als Massenartikel sehr aufwendig ist. Auch läßt sich die Vorrichtung nur mühsam handhaben, da der Produktbehälter nur über seine Dosieröffnung nachzufüllen ist.

Der Erfindung liegt die Aufgabe zugrunde, ein ebenfalls nach dem Kolbenschieberprinzip arbeitendes Dosiersystem mit Produktbehälter zu schaffen, das jedoch wirtschaftlich, insbesondere nach dem Spritzgießverfahren, als Massenartikel herzustellen sowie maschinell zu befüllen und zu konfektionieren ist. Die erfindungsgemäße Lösung ist für die Dosiervorrichtung eingangs

BAD ORIGINAL

0106312

HENKEL KGaA
ZR-FE/Patente

2

genannter Art gekennzeichnet durch die Zusammensetzung aus zwei Bauteilen, nämlich einer mit dem stangenförmigen Kolbenschieber einstückigen Produktbehältertopf und einem die zum Hindurchführen der Einschnürung vorgesehene Bohrung enthaltenden Produktbehälterdeckel, wobei der Produktbehälter zumindest bereichsweise aus einem für den Dosiervorschub des Kolbenschiebers ausreichend elastisch federndem Werkstoff besteht. Vorzugsweise geht der stangenförmige Kolbenschieber mit seinem der Einschnürung gegenüberliegenden Längsende einstückig in die angrenzende Wand des Produktbehälters über.

Durch den Einsatz flexibler Werkstoffe wird es erfindungsgemäß möglich, die Dosiervorrichtung aus lediglich zwei Einzelteilen, nämlich dem den Kolbenschieber enthaltenden Produktbehältertopf und dem die Bohrung zum Herausführen und Zurückziehen der Einschnürung enthaltenden Produktbehälterdeckel, als Massenartikel zu produzieren, maschinell zu befüllen und zu konfektionieren. Insbesondere soll dabei der Bereich um die Verbindungsstelle von Kolbenschieber und Produktbehältertopf aus einer elastischen Membran bestehen. Als Material hierfür sind besonders plastische Werkstoffe wie Thermoplaste, vorzugsweise Polyäthylen oder Polypropylen, geeignet.

3

Anhand der schematischen Darstellung eines Ausführungsbeispiels werden Einzelheiten der Erfindung erläutert. Es zeigen:

Fig. 1   den Produktbehälterdeckel im Schnitt;
Fig. 2   den Produktbehältertopf mit einstückig eingesetztem Kolbenschieber im Schnitt;
Fig. 3   die zusammengesetzten Bauteile von Fig. 1 und 2 im Schnitt in Grundstellung; und
Fig. 4   einen Schnitt durch die Dosiervorrichtung nach Fig. 3 in Funktionsstellung.

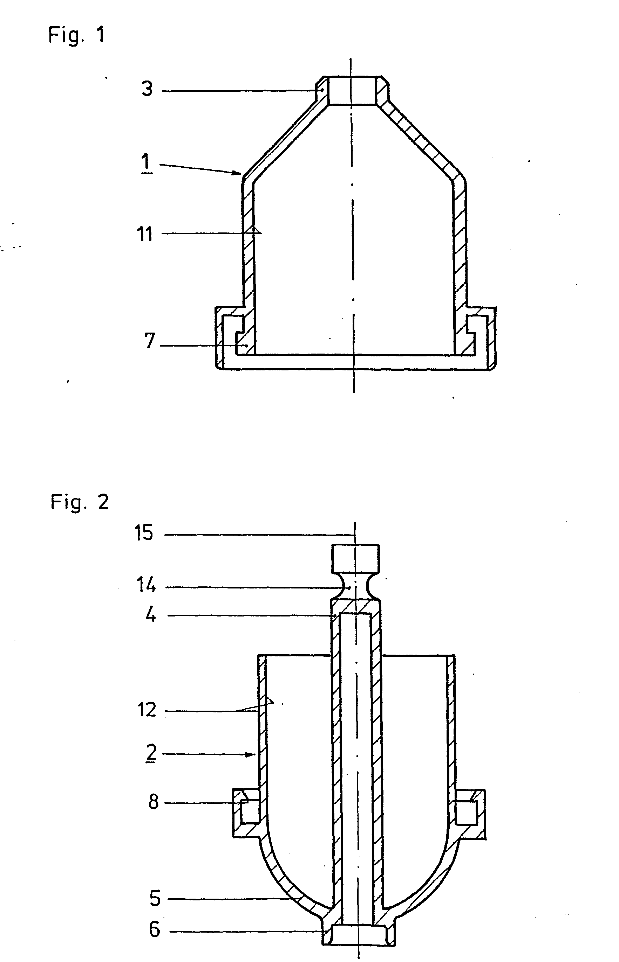

Das Ausführungsbeispiel der Dosiervorrichtung nach Fig. 1 bis 4 besteht im wesentlichen aus dem Produktbehälterdeckel 1 nach Fig. 1 und dem Produktbehältertopf 2 nach Fig. 2. Weitere Teile werden zum Aufbau und Betrieb der Vorrichtung an sich nicht benötigt. Der Produktbehälterdeckel 1 besitzt am Kopf eine Bohrung 3, deren Weite dem Umfang des stangenförmigen Kolbenschiebers 4 von Fig. 2 angepaßt ist. Der Kolbenschieber 4 wird einstückig mit dem Produktbehältertopf 2, vorzugsweise mit dessen, insbesondere domförmigem, Bodenbereich 5, z.B. durch Spritzguß, hergestellt. Der Bodenbereich 5 des Produktbehälters 2 wird zumindest im Bereich der Verbindungsstelle 6 von Kolbenschieber 4 und Produktbehältertopf 2 aus elastisch federndem Material gebildet. Geeignet sind beispielsweise Thermoplaste, wie Polyäthylen oder Polypropylen.

Zum Verbinden von Produktbehälterdeckel 1 und Produktbehältertopf 2 werden am Umfang von Deckel und Topf Schnapplippen 7 bzw. 8 vorgesehen, die ein festes Kuppeln der Bauteile ermöglichen. Die Verbindung der Schnapplippen 7 und 8 kann entweder dauernd oder lösbar sein. Eine lösbare Verbindung wird insbesondere dann vorgesehen, wenn eine bequeme Nachfüllbarkeit des

0106312

HENKEL KGaA
ZR-FE/Patente

4

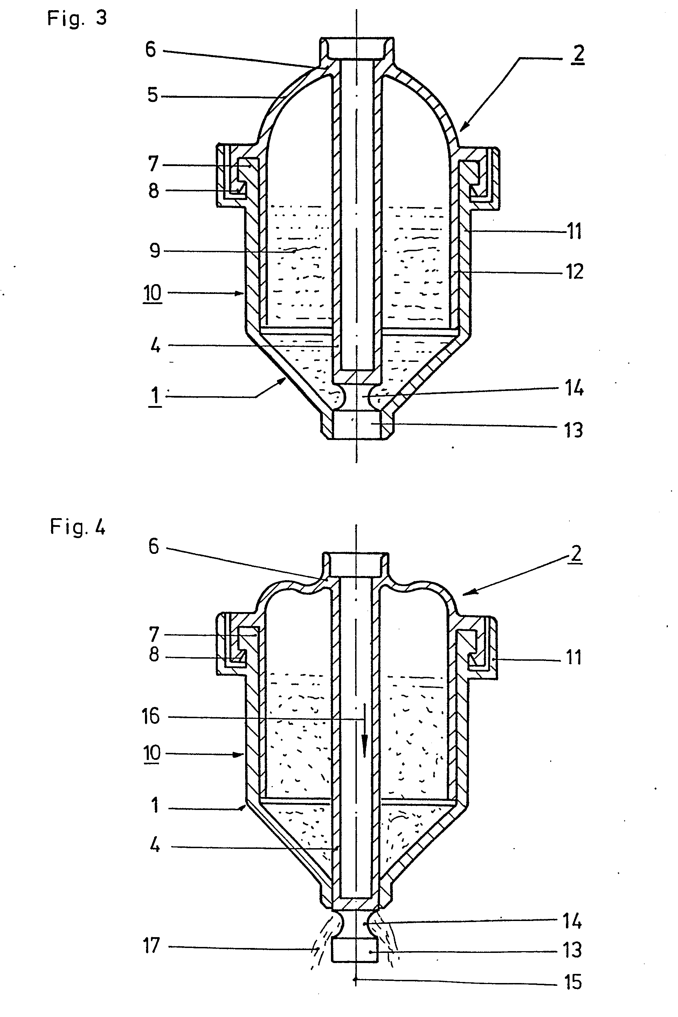

Innenraums 9 des in Fig. 3 insgesamt mit 10 bezeichneten Produktbehälters erwünscht ist. Ein stabiler Zusammenhalt von Deckel 1 und Topf 2 wird auch durch angepaßt konstruierte Zylinderwandungen 11 und 12 von Deckel und Topf gemäß Fig. 3 und 4 unterstützt.

Der stangenförmige Kolbenschieber 4 kann als Vollstange oder, z.B. zur Gewichtsersparnis, zumindest teilweise als Rohr ausgebildet werden. Er besitzt angrenzend an sein freies Ende, den Kolbenschieberkopf 13, und eine Einschnürung 14, deren Volumen denjenigen der vorgesehenen Dosiermenge entspricht. Vorzugsweise wird die Vorrichtung in der gezeichneten Weise symmetrisch ausgebildet, derart, daß der Kolbenschieber 4 etwa im Bereich der Symmetrieachse 15 der Vorrichtung liegt und die Längsachse des stangenförmigen Kolbenschiebers 4 gleich der Längsachse von Deckel 1 und Topf 2 ist.

Ein günstiger Betrieb der Vorrichtung ergibt sich, wenn der Boden 5 im Bereich um die Verbindungsstelle 6 von Topf 2 und Kolbenschieber 4 als elastisch federnd einzudrückende Membran ausgebildet wird.

In Fig. 4 wird der Dosierer in Funktionsstellung dargestellt. Durch Eindrücken des elastisch federnden, membranartigen Bodenbereichs 5 in Pfeilrichtung 16 wird erreicht, daß der Kolbenschieber 4 durch die Bohrung 3 des Deckels 1 vorgeschoben und dabei der Kolbenschieberkopf 13 sowie die Einschnürung 14 nach außen treten. Im Bereich der Einschnürung 14 zwischen den Bohrungswänden 3 eingeschlossenes Dosiergut 17 wird dabei ausgestoßen.

...

0106312

HENKEL KGaA
ZR-FE/Patente

5

Beim Handhaben der Dosiervorrichtung hat sich überraschender
Weise auch die Anordnung der Schnapplippen 6 und 7 als umlaufender Wulst am Umfang des elastischen Bodenbereichs 5 als
sehr günstig erwiesen, weil der Wulst beim einhändigen Eindrücken des Bodenbereichs 5 als Widerlager dienen kann. Auch
ist sowohl für den Zusammenhalt der ganzen Vorrichtung als
auch für das Befüllen mit zu dosierendem Produkt der zylindrische Fortsatz 12 des Topfes 2 vorteilhaft, weil so das Konfektionieren der Vorrichtung vereinfacht wird.

## Bezugszeichenliste

 1 = Produktbehälterdeckel
 2 = Produktbehältertopf
 3 = Bohrung (1)
 4 = Kolbenschieber
 5 = Bodenbereich (2)
 6 = Verbindungsstelle
 7 = Schnapplippe (1)
 8 = Schnapplippe (2)
 9 = Innenraum (10)
10 = Produktbehälter
11 = Zylinderwand (1)
12 = Zylinderwand (2)
13 = Kolbenschieberkopf
14 = Einschnürung
15 = Symmetrieachse
16 = Pfeilrichtung
17 = Dosiergut

6

P a t e n t a n s p r ü c h e

1. Dosiervorrichtung mit einem stangenförmigen, gegen eine elastische Rückstellkraft in Stangenlängsrichtung beweglich gelagerten sowie durch einen das Dosiergut enthaltenden Produktbehälter (10) führenden Kolbenschieber (4) als Portionierer, wobei der Kolbenschieberkopf (13) eine beim Vorschub aus dem Innern (9) des Produktbehälters (10) über eine passende Bohrung (3) nach außen zu verschiebende Einschnürung (14) mit der Dosiermenge entsprechenden Größe aufweist, gekennzeichnet durch die Zusammensetzung aus zwei Bauteilen, nämlich einen mit dem stangenförmigen Kolbenschieber (4) einstückigen Produktbehältertopf (2) und einem die zum Hindurchführen der Einschnürung (14) vorgesehene Bohrung (3) enthaltenden Produktbehälterdeckel (1), wobei der Produktbehälter (1o) zumindest bereichsweise (5) aus einem für den Dosiervorschub des Kolbenschiebers (4) ausreichend elastisch federnden Material besteht.

2. Dosiervorrichtung nach Anspruch 1, dadurch gekennzeichnet, daß der stangenförmige Kolbenschieber (4) mit seinem der Einschnürung (14) gegenüberliegenden Längsende in die angrenzende Wand (5) des Produktbehältertopfes (2) übergeht.

3. Dosiervorrichtung nach Anspruch 1 oder 2, dadurch gekennzeichnet, daß der Boden (5) des Topfes (2) in dem die Übergangsbzw. Verbindungsstelle (6) von Kolbenschieber (4) und Produktbehältertopf (2) umgebenden Bereich als elastische, vorzugsweise domförmige Membran ausgebildet ist.

4. Dosiervorrichtung nach einem oder mehreren der Ansprüche 1 bis 3, dadurch gekennzeichnet, daß die elastische Membran des

BAD ORIGINAL

**0106312**

HENKEL KGaA
ZR-FE/Patente

7

Produktbehälters (10) aus einem Thermoplast, vorzugsweise aus Polyäthylen oder Polypropylen, besteht.

5.  Dosiervorrichtung nach einem oder mehreren der Ansprüche 1 bis 4, dadurch gekennzeichnet, daß der Kolbenschieber (4) zumindest zum Teil als Rohr ausgebildet ist.

Fig. 1

3

1

11

7

Fig. 2

15

14

4

12

2

8

5

6

0106312

Patentanmeldung  D 6671 EP

HENKEL KGaA
ZR-FE/Patente

Fig. 3

Fig. 4

**0106312**

Nummer der Anmeldung

EP 83 11 0169

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A-1 133 137 (SWEDACO PATENTS AB)<br>* Figur 7; Seite 2, Zeile 129 - Seite 3, Zeile 32 *<br><br>----- | 1-3 | G 01 F 11/14 |
| | | | **RECHERCHIERTE SACHGEBIETE (Int. Cl. ³)**<br><br>G 01 F |

Der vorliegende Recherchenbericht wurde für alle Patentansprüche erstellt.

| Recherchenort | Abschlußdatum der Recherche | Prüfer |
|---|---|---|
| DEN HAAG | 26-01-1984 | NUIJTEN E.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82